# EUROPÄISCHE PATENTANMELDUNG

(11) **EP 0 762 762 A2**
(43) Veröffentlichungstag der Anmeldung: **12.03.1997**
(21) Anmeldenummer: 96113386.5
(22) Anmeldetag: 21.08.1996
(51) Int. Cl.: H04N 7/088

(54) **Verfahren für den Zugriff auf Video-, Audio- und Textinformationen**

(30) Priorität: 21.08.1995 DE 19530707
(71) Anmelder: Axel Springer Verlag AG, 20355 Hamburg (DE)
(72) Erfinder: Konrad, Wolfgang, D-90491 Nürnberg (DE)
(74) Vertreter: DIEHL GLAESER HILTL & PARTNER

(57) **Zusammenfassung**

Verfahren für den Zugriff auf Video-, Audio- und Textinformationen, die von mindestens einem Sender ausgegeben und auf Fernsehgeräten, Personlacomputern, Settopboxen und dergl. dargestellt bzw. wiedergegeben werden, wobei der Sender im VBI-Intervall Informationen aussendet, die sich über den gesamten Bildschirm bzw. Display, vorzugsweise über mindestens einen beliebig eingegrenzten Bereich (Fenster), erstrecken und wobei jedes Fenster intervallweise bestimmte Informationen für Bild-, Schrift- bzw. Symboldarstellungen (EPT) erhält und ein Rechner die Bild-, Schrift- bzw. Symboldarstellungen zeitlich gesteuert abgibt, in dem diese Darstellungen in die entsprechenden Zeilen des TV-Signals scenengenau insertiert werden.

## Beschreibung

Die Erfindung bezieht sich auf ein verfahren nach dem Oberbegriff des Patentanspruchs.

Die Erfindung bezieht sich auch auf ein Verfahren, bei welchem der Fernsehzuschauer mit Hilfe seiner Fernbedienung auf gesendete Informationen so einwirken kann, daß er den Eindruck erhält, daß von seiner Seite aus spezielle Informationen zum Sender zurückgegeben werden, so daß der Sender auf diese empfangenen Informationen reagiert und individuell Informationen an den betreffenden Teilnehmer aussendet. In diesem Zusammenhang werden auch die Stichworte "interaktives Fernsehen" oder "scenische Interaktion" verwendet.

Gemäß der vorliegenden Erfindung ist nun außer den üblichen Fernsehgeräten, die für den Empfang von Videotexten geeignet sind, zusätzlich eine Rechnersteuerung beim Sender erforderlich, die die für einzelne Textseiten die sich zeitlich ändernden Informationen ausgibt. Der Fernsehteilnehmer bzw. Teilnehmer drückt eine der bunten Farbtasten (TOP oder FLOP) - so vorhanden - und/oder stellt eine bestimmte Textseite ein, wobei er die Wahl hat, ausschließlich diese Video-Textseite oder aber diese Textseite als Einblendung vor einem laufenden Programm zu empfangen. Die für die gewählte Seite empfangenen Informationen werden zeitlich gesteuert verändert, was bei den üblichen Nachrichten-Videotextseiten nicht der Fall ist bzw. nur in einem relativ großen zeitlichen Abstand erfolgt. Ähnlichkeiten hat dieses Verfahren mit der Übertragung von Untertiteln, wobei die Untertitel jedoch in einer festen geordneten Reihenfolge und zu festgelegten Zielpunkten ausgesendet werden müssen, da sie die Funktion der Sprach-Synchronisation übernehmen.

Im Zusammenhang mit dem Verfahren nach der vorliegenden Erfindung hat der Teilnehmer die Möglichkeit, auf den Abruf der übergebenen Informationen persönlich einzuwirken. Dies sei an einem Beispiel verdeutlicht, wobei dieses Beispiel nicht einschränkend verstanden werden soll.

Empfängt der Teilnehmer beispielsweise einen Film von einem Sender, so könnte in einem Teil des Bildschirms über die speziellen Videotextinformationen eine Zahlenreihe eingeblendet werden, beispielsweise die Zahlen ansteigend von 1 bis 100, die der Teilnehmer vom gleichen oder einem anderen Sender erhält. Der Teilnehmer könnte nun an einer beliebigen Stelle diese fortlaufende Zahlenreihe "anhalten" oder er könnte über eine entsprechende Steuerung durch seine Fernbedienung auch die umgekehrte Reihenfolge der Zahlen auf seinem Bildschirm darstellen. Voraussetzung ist lediglich, daß vom Sender auch die umgekehrte Zahlenreihenfolge auf einer speziellen Videotextseite auch ausgesendet wird. Auf jeden Fall entsteht durch das Verfahren gemäß der Erfindung, übertragen auf das vorliegende Beispiel, der Eindruck, daß bei zwei nebeneinander stehenden Fernsehern, die auf das gleiche Programm eingestellt sind und beispielsweise einen Zahlenspielautomaten zeigen, die Zahlenreihenfolge in einem ansteigt, während bei dem anderen Fernsehgerät die gleiche bildliche Darstellung vorhanden ist, nur daß dort die Zahlenreihenfolge abnimmt.

Es liegt auf der Hand, daß das Verfahren gemäß der vorliegenden Erfindung insbesondere im Zusammenhang mit Spielen oder lotterieähnlichen Übertragungen eingesetzt werden kann.

Es folgt die nicht einschränkende Beschreibung einer Ausführungsform einer Verfahrensvariante, veranschaulicht an einem Wettspiel.

Ein Teilnehmer bzw. Spieler hat seinen Sender eingestellt und ist auf eine spezielle Seite gegangen. Beispielsweise hat er die Seite 720 ausgewählt.

Der Sender sendet die zu einem Gewinnspiel gehörenden Seiten 700 bis 800, also insbesondere auch die Seite 720, als transparente Seite mit Spielhinweisen. Jeder Spieler sieht also weiterhin die laufende Sendung mit den eingeblendeten Hinweisen, wie: "Wählen Sie bitte jetzt mit Ihrer Fernbedienung eine Seite zwischen 700 und 800 aus". Im vorliegenden Fall hat ein Teilnehmer bereits die Seite 720 gewählt.

Die Wahl der Seite 720 wird dem Teilnehmer auch sozusagen quittiert, indem diese Zahl irgendwo auf dem Bildschirm erscheint.

Alle Teilnehmer, die irgendeine der Seiten zwischen 700 und 800 gewählt haben, erhalten nun die Informationen, daß der Spielcomputer im Sender in den nächsten Minuten eine bestimmte Zahl wählen wird.

Nachdem die Zahl gewählt worden ist, im vorliegenden Fall wird angenommen, daß es sich um die Zahl 765 handelt, wird diese Information, nämlich daß die Zahl 765 gewonnen hat, allen Teilnehmern mitgeteilt. Diejenigen, die die Zahl 765 gewählt haben, erhalten die Informationen, daß sie gewonnen haben. Es kann sich hier beispielsweise um einen Preis handeln. Das Spiel könnte auch mit denjenigen Teilnehmern weitergeführt werden, die die Zahl 765 gewählt haben. Der Gewinner könnte auch aufgefordert werden, eine bestimmte Telefonnummer zu wählen, um eine weitere Frage zu beantworten oder dergl.

Alle anderen Teilnehmer, die nicht gewonnen haben, erhalten die Information, daß sie verloren haben, und zwar jeder Teilnehmer für sich, welche Zahl er auch ausgewählt hatte.

Auf alle Fälle gewinnen alle Teilnehmer, ob sie nun gewonnen haben oder nicht, den Eindruck, daß durch ihre Wahl einer bestimmten Zahl dem Sender diese Zahl bekannt sein müsse, daß der Sender also individuell auf die Wahl des einzelnen Fernsehteilnehmers reagiert.

Mit Hilfe der vorliegenden Erfindung können kombinierte Fernsehsendungen nach den Wünschen des Teilnehmers "zusammengestellt werden". Der Teilnehmer kann beispielsweise über den üblichen Bild- und Tonkanal einen Film empfangen, wobei in das Bild über die Informationen, die im VBI-Intervall übertragen werden, zusätzliche Bildinformationen eingegeben werden, nicht nur in der Form von Zahlen oder Symbolen sondern durchaus auch in der Form von Bildern. Hier hat nun der Empfänger die Möglichkeit, eine gewünschte Information aus einem Angebot heraus abzurufen, so daß zwei nebeneinander stehende Fernsehgeräte, die auf das gleich Programm geschaltet sind, ein durchaus unterschiedliches Bild zeigen können.

Bei dem Verfahren gemäß der Erfindung werden die Frames des TV-Bildes framegenau zu denen des Videotextes überlagert, d.h. als Anmutung entsteht eine Compound-Szene, die der Zuschauer darüber hinaus in dem Maße beeinflussen kann, wie es von dem momentanen Zustand des Videotext- Inserters bzw. Fernsehdecoders gegeben ist. Die Gesamtkapazität der für Videotext verwendeten VBI-Zeilen (maximal zur Zeit 12 Zeilen pro Halbbild) stellt die Obergrenze des Datendurchsatzes dar.

Die gegebenenfalls dynamisch erzeugten Videotextinformationen bestimmen im Rahmen der Normen den Frame-Takt.

## Patentansprüche

1. Verfahren für den Zugriff auf Video-, Audio- und Textinformationen, die von mindestens einem Sender ausgegeben und auf Fernsehgeräten, Personlacomputern, Settopboxen und dergl. dargestellt bzw. wiedergegeben werden, wobei der Sender im VBI-Intervall Informationen aussendet, die sich über den gesamten Bildschirm bzw. Display, vorzugsweise über mindestens einen beliebig eingegrenzten Bereich (Fenster), erstrecken und wobei jedes Fenster intervallweise bestimmte Informationen für Bild-, Schrift- bzw. Symboldarstellungen (EPT) erhält und ein Rechner die Bild-, Schrift- bzw. Symboldarstellungen zeitlich gesteuert abgibt, in dem diese Darstellungen in die entsprechenden Zeilen des TV-Signals scenengenau insertiert werden.
